# EUROPÄISCHE PATENTSCHRIFT

(11) **EP 0 476 672 B1**
(45) Veröffentlichungstag und Bekanntmachung des Hinweises auf die Patenterteilung: **04.01.1995**
(21) Anmeldenummer: 91115976.2
(22) Anmeldetag: 19.09.1991
(51) Int. Cl.: E01C 11/22, E03F 5/06

(54) **Vorrichtung zum verriegelbaren Halten einer überfahrbaren Abdeckung auf einer Entwässerungsrinne**
Device for lockably holding a cover on a drainage channel in a traffic road surface
Dispositif pour retenir verrouillé un revêtement routier sur un caniveau d'écoulement

(30) Priorität: 20.09.1990 DE 4029745; 19.03.1991 DE 4108999; 10.06.1991 DE 4119118
(43) Veröffentlichungstag der Anmeldung: 25.03.1992
(73) Patentinhaber: ACO Severin Ahlmann GmbH & Co. KG, D-24755 Rendsburg (DE)
(72) Erfinder: Schiewe, Walter, W-2370 Büdelsdorf (DE)
(74) Vertreter: Bohnenberger, Johannes, Dr.

(56) Entgegenhaltungen:
- EP-A- 0 081 762
- EP-A- 0 204 278
- DE-A- 3 133 658
- US-A- 4 739 896

## Beschreibung

Die Erfindung betrifft eine Vorrichtung zum verriegelbaren Halten einer überfahrbaren Abdeckung auf einer Entwässerungsrinne, einem Gulli oder dergleichen Bauteil nach dem Oberbegriff des Patentanspruches 2 beziehungsweise den Merkmalen a) - f) (teilweise) des Patentanspruches 1.

Entwässerungsrinnen, Versorgungs- oder Kabelkanäle, Gullis oder dergleichen werden im allgemeinen über Abdeckungen verschlossen, so daß der (Fußgänger- oder Fahr-) Verkehr nicht behindert wird. Derartige Abdeckungen müssen nun sehr sicher auf dem Bauteil sitzen und mit diesem verbunden sein, damit keine Gefährdung des Verkehrs auftritt. Insbesondere dann, wenn das abgedeckte Bauteil in einer Straße oder aber auch auf einem Fabrikgelände eingebaut ist, muß die Verbindung zwischen Abdeckung und Bauteil sehr hohen Belastungen standhalten. Wenn man sich beispielsweise die durch einen schnellfahrenden PKW oder gar einen schwer beladenen LKW beim Darüberfahren auftretenden, fast stoßförmigen Wechselbelastungen betrachtet oder die (zusätzlichen) Belastungen mit einbezieht, welche beim Bremsen entstehen, so wird klar, daß die Befestigung der Abdeckung auf dem Bauteil sorgfältig durchdacht sein muß.

Eine Möglichkeit, um die Sicherheit des Halts der Abdeckung auf dem Bauteil zu erhöhen, liegt darin, die Abdeckung sehr schwer zu machen. Ein Beispiel hierfür findet sich in den überall zu findenden Kanalabdeckungen, die einen mit Beton ausgegossenen gußeisernen Rahmen aufweisen. Die Abdeckung wird oftmals mit dem Bauteil verschraubt. Diese Befestigungsmöglichkeit ist insofern nachteilig, als ein Öffnen der Abdeckung aufgrund deren hohen Gewichts sowie der umständlichen Handhabung von Verschraubungen schwierig ist. Darüber hinaus sind Verschraubungen oftmals nach längerer Zeit fest korrodiert.

Aus der CH-PS 621,593 ist eine Entwässerungsrinne mit einer Abdeckung bekannt, die an der Entwässerungsrinne über einen Schraubbolzen und eine, in der Entwässerungsrinne befestigte Traverse mit Gewindeloch gesichert ist. Auch hier tritt das Problem auf, daß eine Schraubverbindung, die Korrosionseinflüssen unterworfen ist, gelöst werden muß, bevor man die Abdeckung entfernen kann. Darüber hinaus ist die Befestigung der Abdeckung auf der Rinne insofern kompliziert, als der Monteur mit viel Gefühl das Gewindeloch mittels des Schraubbolzens ertasten muß, um diesen einschrauben zu können.

Eine erheblich einfacher zu handhabende Verriegelungsvorrichtung für die Abdeckung einer Entwässerungsrinne oder dergleichen Bauteil ist aus der EP 0 081 741 C1 bekannt. Bei dieser Lösung ist ebenfalls ein, durch die Abdeckung führender Gewindebolzen vorgesehen, der in einem Gewindeloch einer Quertraverse sitzt. Die Quertraverse ist jedoch so dimensioniert, daß sie beim Aufsetzen der Abdeckung zunächst im wesentlichen in Längsrichtung der Rinne positionierbar ist, um sie dann durch Drehen des Gewindebolzens in einseitig offene Ausnehmungen in der Innenwand der Rinne einrasten lassen zu können, wobei sich dann beim Weiterdrehen des Gewindebolzens die Enden der Traverse an die oberen Endflächen der Öffnungen anschmiegen und die Abdeckung so festziehbar ist. Durch die eingangs beschriebenen hohen Belastungen, insbesondere durch die Wechselbelastungen kann es jedoch im Laufe der Zeit dazu kommen, daß sich die Verbindung lockert. Darüber hinaus liegt auch bei dieser Lösung wieder eine Schraubverbindung vor, die mit den beschriebenen nachteiligen Folgen im Laufe der Zeit korrodieren kann.

Aus der DE-A-3 133 658 ist eine Verriegelungsvorrichtung für eine Schachtabdeckung bekannt, die eine Anzahl am Umfang eines Deckels angeordneter Keilnuten und in jeder Nut ein Verriegelungsstück enthält. Diese Keilnuten werden gebildet aus einerseits ersten Schrägflächen an der Innenwand eines in den Boden einzulassenden Bauteils und andererseits zweiten Schrägflächen an einem Schachtdeckel. Die Schrägflächen bilden miteinander einen nach unten gerichteten, konvergierenden Spalt, eben die Teilnuten. Wenn man den Deckel nach oben heben will, ergibt sich eine Klemmwirkung aufgrund einer Verkeilung des Verriegelungsstücks im Spalt. Insbesondere dann aber, wenn die Schrägflächen glitschig sind, was durch eindringenden Schmutz, Wasser und insbesondere Öl sehr leicht der Fall ist, kann die Klemm- bzw. Verkeilungswirkung abnehmen, so daß bei höheren Kräften durch schwere, den Deckel überfahrende Fahrzeuge der Deckel hochgeschleudert werden kann.

Der Erfindung liegt die Aufgabe zugrunde, mit einfachen Mitteln eine erhöhte Sicherheit bei gleichzeitig erleichterter Handhabbarkeit bei einer Verriegelungsvorrichtung der eingangs genannten Art zu erzielen.

Diese Aufgabe wird entweder durch die im Anspruch 1 oder durch die im Anspruch 2 angegebenen Merkmale gelöst.

Ein wesentlicher Punkt der Erfindung liegt darin, daß Bewegungen der Abdeckung - und damit des Verriegelungsstücks - die Verbindungen nicht lockern, sondern eher festziehen.

Durch dieses selbsttätige Nachspannen der Verbindungsvorrichtung wird auch dann die Abdeckung sicher auf dem Bauteil gehalten, wenn Materialverformungen oder Abnutzungen auftreten.

Im allgemeinen genügt es, das Verriegelungsstück so schwer auszubilden, daß es durch sein Eigengewicht die Schrägfläche entlang nach unten wandert. Selbstverständlich ist es auch möglich, Federn oder dergleichen zu verwenden, um das Verriegelungsstück in die Festspannrichtung zu beaufschlagen.

Bei einer ersten Ausführungsform der Erfindung sind zwei Verriegelungsteile, eines am Bauteil und eines an der Abdeckung vorgesehen, deren Schrägflächen gleichsinnig geneigt sind, so daß zwischen ihnen ein Spalt entsteht, der sich beim Abheben der Abdeckung vom Bauteil schließt. Zwischen den Schrägflächen, also im Spalt sitzt dann das Verriegelungsteil, so daß die beiden Verriegelungsteile nicht mehr gegeneinander in vertikaler Richtung verschiebbar sind. Vorzugsweise sind die Schrägflächen so ausgebildet, daß der Spalt nach unten konvergiert. Aufgrund der Beaufschlagung des Verriegelungsstücks wird dieses nach unten zum verjüngten Ende des Spaltes gezogen und spannt so die Verbindung fest, wodurch die Abdeckung sicher auf dem Bauteil gehalten wird. Selbst dann, wenn durch große (stoßförmige) Dauerbelastungen das Verriegelungsstück verformt, also schlanker wird, ist ein sicherer Halt gewährleistet, da sich die Vorrichtung selbstständig nachspannt.

Die Nachspannwirkung ist dann besonders groß, wenn das Verriegelungsstück mindestens im Bereich der Schrägflächen im wesentlichen kreisrund ausgebildet ist. Dadurch kann es sich besonders leicht im Spalt so lange nach unten bewegen, bis es mit der oberen Schrägfläche in Eingriff kommt. Dennoch tritt eine hinreichend große Klemmwirkung dann auf, wenn die Abdeckung nach oben gehoben wird.

Vorzugsweise sind die Verriegelungsteile paarweise einander gegenüberliegend angeordnet. Bei Verwendung an einem kreisrunden Deckel liegen die Verriegelungsteile einander diametral gegenüber. Bei Verwendung in Zusammenhang mit einer Entwässerungsrinne, einem Versorgungs- oder Kabelkanal oder dergleichen länglichen Bauteil liegen die Verriegelungsteile an den Seitenrändern des Bauteils und zwar vorzugsweise ein Paar am einen Ende und ein Paar am anderen Ende. Die Handhabung der Vorrichtung beim Öffnen sowie die Herstellung der Vorrichtung sind in diesem Fall besonders einfach, da jeweils für ein Paar von Verriegelungsteilen - wobei jedes Verriegelungsteil gegebenenfalls jeweils zwei Schrägflächen aufweist - ein einziges Verriegelungsstück verwendbar ist, dessen zwei Enden jeweils die Verriegelung eines Verriegelungsteils bewirken.

Das Verriegelungsstück ist vorzugsweise als herausnehmbares, also einzeln handhabbares Teil ausgebildet, so daß man dann, wenn man das Verriegelungsteil aus dem Spalt zwischen den Schrägflächen herausgenommen hat, die Abdeckung leicht abheben kann. Insbesondere sind hierbei Fixiereinrichtungen vorgesehen und derart angebracht, daß das Verriegelungsstück außer Eingriff mit den Schrägflächen (bzw. mit der Schrägfläche) gehalten werden kann, ohne es ganz entfernen zu müssen.

Man kann nun das am Bauteil befestigte Verriegelungsteils direkt im Bauteil selbst ausbilden - z. B. als Ausnehmung. Dann, wenn das Bauteil selbst z. B. aus Beton, vorzugsweise aber aus Polymerbeton gefertigt ist, hat es sich als vorteilhaft erwiesen, wenn das Verriegelungsteil an einem, mit dem Bauteil verbundenen Metallelement befestigt ist, bzw. von diesem mit-gebildet wird.

Dieses Metallelement kann nun entweder in das (aus Beton gefertigte) Bauelement nachträglich eingesetzt oder miteingegossen werden. Diese Lösung wird man insbesondere dann wählen, wenn keine allzu hohe Belastbarkeit gefordert ist.

Für Schwerlast-Beanspruchung ist es jedoch von Vorteil, wenn das Metallelement gleichzeitig eine Auflagefläche für die Abdeckung aufweist, also eine Zarge am Oberrand des Bauelementes bildet. Dadurch, daß eine solche Auflagefläche vorgesehen ist, wird eine erhöhte Verschleißsicherheit und Belastbarkeit sichergestellt.

Wenn die Auflagefläche im wesentlichen formschlüssig mit der Abdeckung in Eigriff bringbar ist, so werden die Verschleißerscheinungen an allen an sich gegeneinander bewegbaren Bauteilen verringert, die Sicherheit der Verbindung also erhöht.

Wie eingangs erwahnt, muß zum Abheben der Abdeckung das Verriegelungsstück aus dem Spalt entfernt bzw. unter der Schrägfläche herausgenommen werden. Um das Verriegelungsstück in dieser Position zu halten, kann man als Fixiereinrichtungen nach oben offene Rastausnehmungen vorsehen, die in einem, mit der Abdeckung verbundenen Bauteil sitzen. In diese Rastausnehmungen kann dann das Verriegelungsstück eingehängt werden. Vorzugsweise sitzt eine solche Rastausnehmung über dem oberen Ende des Spaltes. Diese Ausführungsform ist zwar besonders einfach herzustellen und zu handhaben, jedoch könnte bei extrem hohen Stoßbelastungen das Verriegelungsstück aus dem Spalt herausgeworfen werden und in der Rastausnehmung hängenbleiben, so daß die Verriegelungswirkung nicht mehr gegeben ist.

Um dieses zu vermeiden, wird bei einer anderen bevorzugten Ausführungsform der Erfindung die Fixiereinrichtung als getrennt handhabbares Fixierteil ausgebildet, mittels dessen das Verriegelungsteil außer Eingriff mit der bzw. den Schrägfläche(n) gehalten werden kann. Die Fixiereinrichtung wird also nur im Bedarfsfall - zum Abheben der Abdeckung - eingesetzt bzw. in eine entsprechende Position gebracht. Hierbei eignet sich als Fixierteil ein solches, das eine nach oben offene Rastausnehmung aufweist, in welcher das Verriegelungsstück aufnehmbar ist.

Im Prinzip ist es gleichgültig, in welcher Richtung die Schrägflächen relativ zu einer Innenwand des Bauteils verlaufen, wenn sie nur schräg nach unten zeigen. Die Schrägflächen können also sowohl senkrecht von der Innenwand des Bauteils hervorstehen, als auch parallel zur Innenwand verlaufen oder in einem dazwischenliegenden Winkel angebracht sein.

Bei einer ersten bevorzugten Ausführungsform der Erfindung ist an der Unterseite der Abdeckung ein Quersteg angebracht, der als Band ausgebildet senkrecht nach unten steht. In den randseitigen Endkanten des Querstegs sind divergierende kerbenförmige Öffnungen vorgesehen, deren Unterkanten die zweite Schrägfläche bilden. Das erste Verriegelungsteil ist als bandförmiger Körper ausgebildet, der von der Seitenwand des Bauteils nach innen hervorsteht. Dieses Band ist so abgewinkelt, daß seine untere Fläche mit der Unterkante der Ausnehmung einen nach unten konvergierenden Spalt bildet.

Vorzugsweise ist der bandförmige Körper an einem (ebenfalls bandförmigen) Haltestück befestigt, das in eine Seitenwand des Bauteils eingesetzt ist. Das Bauteil weist also einen entsprechenden Schlitz auf. Vorzugsweise ist das Haltestück als Traverse ausgebildet, die mit ihren Enden jeweils in einer Seitenwand des Bauteils sitzt. Hieraus resultiert ein einfacher Aufbau bei hinreichender Haltbarkeit.

Wenn die erste Schrägfläche parallel zum Rand des Bauteils (bei einem runden Kanaldeckel entspricht dies einer tangentialen Anordnung) angeordnet ist, so kann das erste Verriegelungsteil als Ausnehmung unterhalb der Auflagefläche für die Abdeckung ausgebildet sein. Vorzugsweise ist in diesem Fall die Ausnehmung in einer Verstärkungszarge angeordnet.

Diese Ausnehmung ist zwar zum Innenraum des Bauteils hin offen, dennoch könnte sich Schmutz in der Ausnehmung ansammeln und festsetzen, so daß die Funktion der Verriegelungseinrichtung beinträchtigt wird. Um dies zu vermeiden, wird der untere Rand der Ausnehmung von einer Begrenzungsfläche gebildet, die nach außen (zum Innenraum des Bauteils) hin abfällt, also nach unten geneigt ist. In die Ausnehmung hineinfallende Schmutzteile, Steine oder dergleichen finden somit keinen Halt.

Als Verstärkungszarge eignet sich beispielsweise eine solche, wie sie in der EP 0 081 762 A1 beschrieben ist.

Wenn die Abdeckung als Metall-Gußteil ausgebildet ist, so ist die Anbringung bzw. Ausbildung des zweiten Verriegelungsteils aus gußtechnischen Gründen sehr schwierig, da die notwendige zweite Schrägfläche eine Hinterschneidung bildet. Hier ist es nun von Vorteil, wenn das zweite Verriegelungsteil einen Steg umfaßt, dessen Oberkante die zweite Schrägfläche bildet und der mit einem Ende oder mit beiden Enden in die Unterseite der Abdeckung übergeht, wobei die Abdeckung im Bereich über der Schrägfläche nach oben hin offen ist. Somit bildet die Schrägfläche dann keine Hinterschneidung mehr, sondern kann beim Gießen durch einen Kern definiert werden, der durch die Öffnung in der Abdeckung ragt.

Beim Aufsetzen der Abdeckung auf das Bauteil müssen die Verriegelungsteile und -stücke in vorgeschriebenen Positionen zueinander stehen. Bei einer bevorzugten Ausführungsform der Erfindung, die sich insbesondere auf ein langgestrecktes rinnen- oder trogförmiges Bauteil bezieht, ist an der Abdeckung ebenso wie am Bauteil jeweils eine Justiereinrichtung, z. B. eine Kerbe bzw. eine Nase vorgesehen, die dann in formschlüssigem Eingriff miteinander stehen, wenn die Abdeckung direkt auf dem Bauteil sitzt und verriegelt werden kann. Diese Justiereinrichtungen sind vorzugsweise symmetrisch zu einer Symmetrieebene angebracht, welche senkrecht durch die Längsachse des Bauteils verläuft. Somit ist es gleichgültig, welches Ende der Abdeckung an welchem Ende des rinneförmigen Bauteilkörpers zu liegen kommt, was die Montage erleichtert.

Ein weiterer Vorteil einer derartigen Justiereinrichtung liegt darin, daß in Richtung der Bauteil-Längsachse auf die Abdeckung wirkende Kräfte durch die Justiereinrichtungen aufgefangen werden können.

Bei einem solchen Bauteil ist es weiterhin von Vorteil, wenn jeweils im Bereich der Enden des Bauteils bzw. der Abdeckung ein Paar von Verriegelungsteilen vorgesehen ist und diese ebenfalls bezüglich der Symmetrieebene symmetrisch ausgebildet sind. Insbesondere dann, wenn die ersten Schrägflächen im wesentlichen parallel zur Innenwand des Bauteilkörpers (bzw. zu dessen Oberrand) verlaufen wird durch diese Ausführungsform der Erfindung ein zusätzlicher Halt der Abdeckung auf dem Bauteil gegenüber Kräften in Bauteil-Längsrichtung gewährleistet, da eine Bewegung der Abdeckung relativ zum Bauteil immer zum Verengen eines Spaltpaares und Einklemmen und der dazu gehörigen Verriegelungsstücke führt. Vorzugsweise sind die Schrägflächen hierbei so ausgebildet, daß das in Kraftrichtung gesehen führende bzw. vordere Verriegelungsstück bei einer Kraftbeaufschlagung in Bauteil-Längsrichtung verstärkt eingeklemmt wird. Dadurch wird die Abdeckung auch bei einer derartigen Kraftbeaufschlagung besonders sicher auf dem Bauteil gehalten.

Bevorzugte Ausführungsformen der Erfindung sind in den abhängigen Ansprüchen näher erläutert.

Im folgenden werden Beispiele bevorzugter Ausführungsformen anhand von Abbildungen näher erläutert. Hierbei zeigen:
- Fig. 1: einen Querschnitt durch eine Entwässerungsrinne mit einer ersten Ausführungsform der Verriegelungsvorrichtung;
- Fig. 2: einen vergrößerten Ausschnitt aus Fig. 1;
- Fig. 3: eine Draufsicht auf die Anordnung nach Fig. 1;
- Fig. 4: einen Querschnitt durch eine Abdeckung in einer Ansicht entlang der Linie IV-IV aus Fig. 3;
- Fig. 5: einen Teil-Querschnitt entlang der Linie V aus Fig. 3;
- Fig. 6: ein Verriegelungsstück gemäß Fig. 1 in Draufsicht;
- Fig. 7: eine Seitenansicht einer Traverse mit ersten Verriegelungsteilen gemäß Fig. 1;
- Fig. 8: eine Draufsicht auf das Teil gemäß Fig. 7;
- Fig. 9: einen Teilschnitt durch eine zweite Ausführungsform der Erfindung;
- Fig. 10: einen Schnitt entlang der Linie X-X aus Fig. 9;
- Fig. 11: eine teilgeschnittene perspektivische Darstellung einer dritten Ausführungsform der Erfindung;
- Fig. 12: eine schematisierte Seitenansicht einer vierten Ausführungsform der Erfindung;
- Fig. 13: eine Teilansicht von unten auf eine Verstärkungszarge;
- Fig. 14: eine Seitenansicht von der Innenseite eines Bauteils auf eine Zarge gemäß Fig. 13;
- Fig. 15: einen Schnitt entlang der Linie XV-XV aus Fig. 14;
- Fig. 16: eine schematisierte perspektivische Schitt-Darstellung entlang der Linie XVI-XVI aus Fig. 14 durch eine Zarge und eine Bauteil-Seitenwand;
- Fig. 17: einen Teil-Längsschnitt durch einen Abdeckrost;
- Fig. 18: eine Draufsicht auf den Rost nach Fig. 17;
- Fig. 19: einen Schnitt ähnlich dem nach Fig. 17 durch eine weitere Ausführungsform eines Rostes;
- Fig. 20: eine Draufsicht auf den Rost nach Fig. 19;
- Fig. 21: einen Teilschnitt durch einen Rost ähnlich dem nach Fig. 17;
- Fig. 22: eine Seitenansicht einer Fixiereinrichtung, die bei einem Rost gemäß Fig. 21 Anwendung finden kann,
- Fig. 23: eine Ansicht des Rostes nach Fig. 21 mit eingesetzter Fixiereinrichtung nach Fig. 22,
- Fig. 24: einen Teil-Querschnitt durch eine weitere bevorzugte Ausführungsform der Erfindung ähnlich der nach Figuren 1 - 8,
- Fig. 25: eine weitere Ausführungsform der Erfindung ähnlich der nach Fig. 23,
- Fig. 26: eine Draufsicht auf die Ausführungsform nach Fig. 25,
- Fig. 27: eine Seitenansicht einer Fixiereinrichtung, die bei einem Rost gemäß Fig. 25, 26 Anwendung findet, und
- Fig. 28-30: eine weitere Ausführungsform der Erfindung in einer Teil-Darstellung.

In der nachfolgenden Beschreibung werden gleiche oder gleichwirkende Teile mit denselben Bezugsziffern bezeichnet.

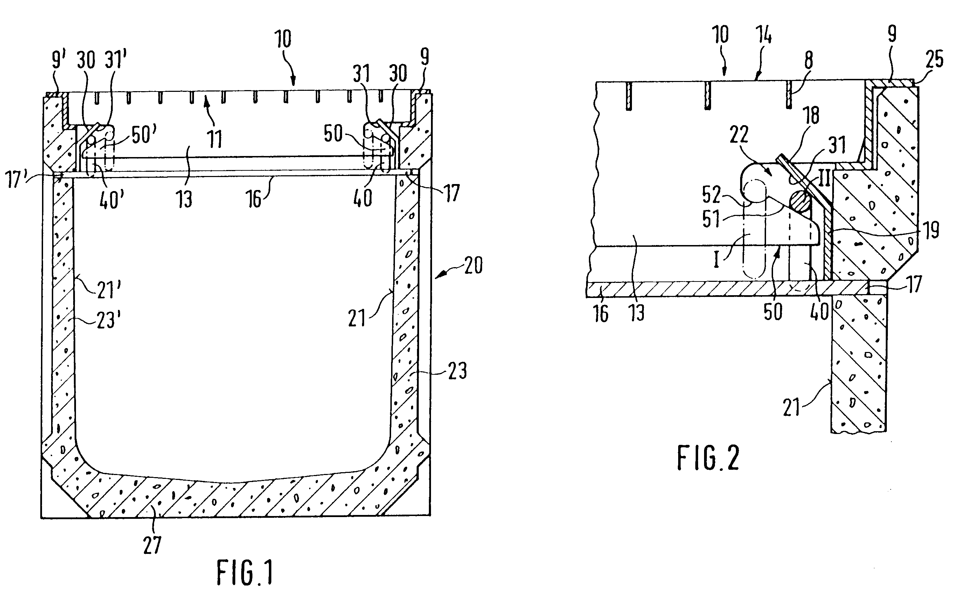

Im folgenden wird eine erste bevorzugte Ausführungsform der Erfindung anhand der Abbildungen 1 - 8 erläutert. Hierbei sind als Ausführungsbeispiele Entwässerungsrinnen gezeigt. Selbstverständlich ist die Erfindung aber auch auf andere Bauteile mit Abdeckungen anwendbar.

Bei dem in den Figuren 1 - 8 beschriebenen Ausführungsbeispiel der Erfindung handelt es sich um eine Entwässerungsrinne für mittelschwere Belastungen mit einem, das Bauteil 20 bildenden rinnenförmigen Körper aus Polyesterbeton, der Seitenwände 23 und einen Boden 27 aufweist. Sein oberer Rand 25 ist derart mit einem innen liegenden Absatz ausgebildet, das ein im Querschnitt, im wesentlichen Z-förmiger Rahmen 9 einer Abdeckung 10 formschlüssig einsetzbar ist.

Die Abdeckung 10 ist gitterförmig ausgebildet, wobei Querstege 13 und Längsstege 8 im Rahmen 19 sitzen. Zwischen den Querstegen 13 und den Längsstegen 8 sind somit Abflußöffnungen 14 freigelassen.

Im Bereich beider Enden der Abdeckung 10 ist jeweils mindestens ein Quersteg 13 an seinen Enden mit einem Spalt 22 versehen, der nach innen konvergierend, eine obere, im wesentlichen horizontale Endfläche und eine untere, schräg nach unten abfallende Schrägfläche 51 bildet.

An seinem inneren Ende, also dort, wo die Kerbe 22 hinkonvergiert, geht die Schrägfläche 51 in eine Rastausnehmung 52 über, die im wesentlichen einen halbkreisförmigen Querschnitt aufweist. Die Schrägfläche 51 des Spaltes 22 bildet ein Verriegelungsteil 50, dessen Funktion weiter unten näher erläutert wird.

Unterhalb des Unterrandes des Querstegs 13 im wesentlichen parallel zu diesem verlaufend, ist ein bandförmiges Haltestück 16 mit seinen Enden 17, 17' in entsprechende Ausnehmungen in den Seitenwänden 23 des Bauteils 20 eingelassen. Die Oberfläche des bandförmigen Haltestücks 16 ist somit parallel zur Unterseite 11 der Abdeckung 10.

Auf den Quersteg 13 sind senkrecht nach obenstehende bandförmige Körper 19 so aufgeschweißt, daß sie in einem ersten Abschnitt im wesentlichen parallel zur Innenwand 21 des Bauteils 20 verlaufen.

Die zur Innenwand 21 parallelen Abschnitte der bandförmigen Körper 19 gehen in Abschnitte 18 über, die zur Innenwand 21 abgewinkelt sind. Die Anordnung und die Formgebung der abgewinkelten Abschnitte 18 sind nun derart getroffen, daß die untere Schrägfläche 31 des abgewinkelten Abschnittes 18 zur (oberen) Schrägfläche 51 der Kerbe 22 nach außen konvergierend geneigt ist. Der durch diese beiden Schrägflächen 31 und 51 definierte Spalte 22 ist also nach außen, zur jeweiligen Seitenwand 23 hin geneigt und konvergiert in diese Richtung.

Die Schrägfläche 18 des bandförmigen Körpers 19 bildet somit ein weiteres Verriegelungsteil 30.

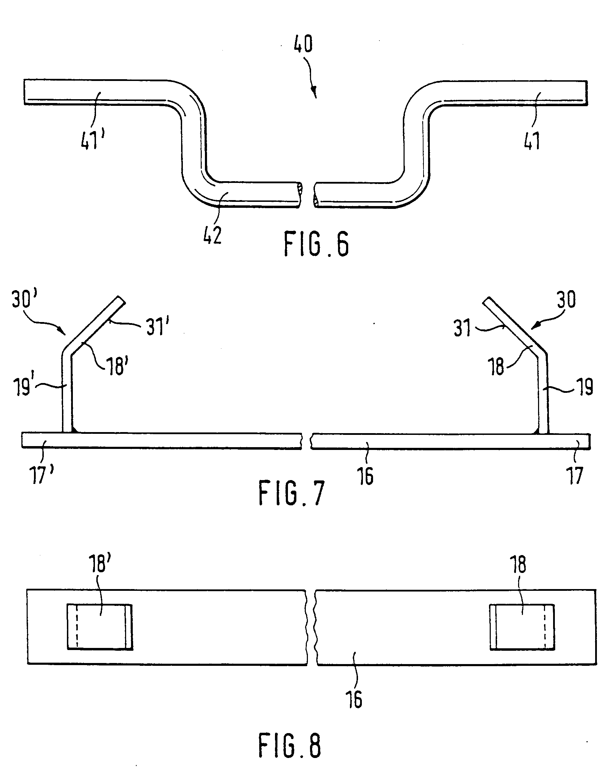

In die Kerbe 22 ist ein Verriegelungsstück 40 mit seinen Enden 41, 41' (Fig. 6) eingesetzt, die einen im wesentlichen kreisrunden Querschnitt aufweisen. In der in Fig. 2 gezeigten Position sitzen somit die Enden 41 des Verriegelungsstücks im verjüngten Bereich der Kerbe 22 und werden dort aufgrund des Eigengewichts des Verriegelungsstücks 40 in fester Anlage sowohl mit der Schrägfläche 51 als auch mit der Schrägfläche 31 gehalten. Diese Position ist in Fig. 2 mit der Bezugsziffer II bezeichnet.

Wenn nun in dieser Verriegelungsposition II eine nach oben gerichtete Kraft auf die Abdeckung 10 wirkt, so daß diese vom Oberrand 25 des Bauteils 20 abgehoben werden könnte, so wirken die Enden 41, 41' des Verriegelungsteils 40 als Klemmkörper und spreizen sich zwischen die untere Schrägfläche 51 und die obere Schrägfläche 31 ein. Das Bauteil 10 kann somit nicht abgehoben werden. Um diese Klemmwirkung zu verstärken und eine Rollbewegung des Verriegelungsstücks zu verhindern, weist dieses eine Kröpfung (Fig. 6) auf, die somit dem Verriegelungsstück 40 eine unsymmetrische Massenverteilung verleiht, so daß ein, auf die Enden 41, 41' des Verriegelungsstücks 40 wirkendes Drehmoment das Verriegelungsstück 40 nicht drehen kann. Somit ist ein fester Halt der Abdeckung 10 auf dem Bauteil 20 sichergestellt.

Selbst bei Dauerbelastungen, die dazu führen könnten, daß die Schrägflächen 31, 51 ausgeschlagen werden oder nachgeben, oder aber die Enden 41, 41' des Verriegelungsstücks 40 verformt werden, führen nicht dazu, daß sich die Verbindung zwischen der Abdeckung 10 und dem Bauteil 20 lockert. Dadurch nämlich, daß der Spalt 22 zwischen den Schrägflächen 31, 51 nach unten (und außen) konvergierend verläuft, führen Erschütterungen der Abdeckung 10 dazu, daß das Verriegelungsstück 40 bzw. dessen Enden 41, 41' fest in den Spalt hineingerüttelt werden und sich dort einklemmen. Dies bedeutet letztlich, daß Schwingungsbewegungen, welche die Verbindungen zwischen Abdeckung und Bauteil bei herkömmlichen Konstruktionen lockern oder gar öffnen können, bei der vorliegenden Konstruktion das Gegenteil bewirken: Die Verbindung wird fester.

Selbstverständlich ist es auch möglich, zusätzliche Beaufschlagungs-Einrichtungen, z. B. Gewichte oder Federn am Verriegelungsstück 40 anzubringen, um dieses mit größerer Kraft in den sich verjüngenden Spalt 22 hineinzuziehen.

Bei Verwendung gesonderter Beaufschlagungsmittel, welche das Verriegelungsstück in den konvergierenden Spalt ziehen, wäre es auch möglich, die Schrägflächen so zu neigen, daß der Spalt in Richtung auf sein verengtes Ende gesehen nach oben zeigt.

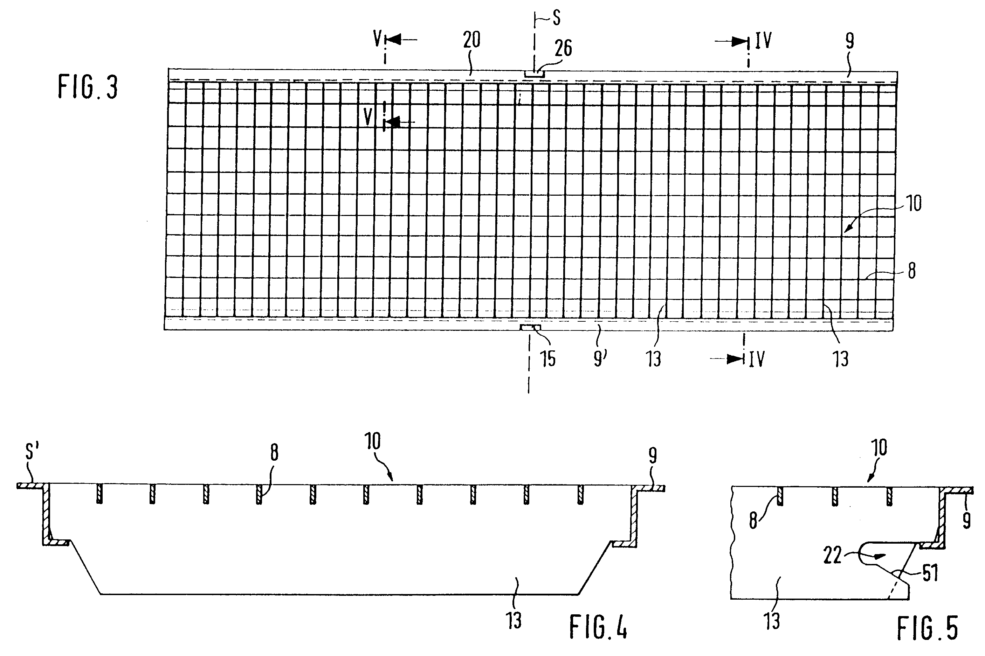

Im Vorhergehenden wurde erläutert, wie von der Abdeckung 10 hochhebende Kräfte aufgefangen werden. Es wirken aber auf die Abdeckung 10 auch Kräfte in horizontaler Richtung. Die Kräfte, welche quer zur Längserstreckung des Bauteils 20 wirken, werden durch den formschlüssigen Halt zwischen dem Rahmen 9 und dem entsprechend geformten Oberrand 25 des Bauteils 20 sicher aufgefangen. Die in Längsrichtung des rinnenförmigen Bauteils 20 wirkenden Kräfte könnten jedoch die Abdeckung 10 entlang des rinnenförmigen Bauteils 20 verschieben (in Fig. 3 nach links oder rechts).

Um dem entgegenzuwirken, sind nun zwei Maßnahmen getroffen. Zum einen ist der bandförmige Körper 19 in Längsrichtung des Bauteils 20 gesehen zum dazugehörigen Quersteg 13 (mit Spalt 22) versetzt. Die Versetzung an den beiden Enden des Bauteils 20 ist symmetrisch zu einer Symmetrieebene S gestaltet, welche senkrecht zur Längsachse des Bauteils 20 mittig verläuft. Als weiterer Vorteil dieser Anordnung ist zu bemerken, daß es beim Einsetzen einer Abdeckung 10 gleichgültig ist, ob diese (in bezug auf Fig. 3) links- oder rechtsherum aufgesetzt wird.

Eine weitere Maßnahme zur Sicherung gegen horizontale Verschiebungen in Längsrichtung des Bauteils 20 und gleichzeitig zum Zwecke einer exakten Justierung der Schrägflächen 31, 51 zueinander sind am Oberrand 25 des Bauteils 20 Nasen 26 vorgesehen, welche in korrespondierende Kerben 15 des Rahmens 9 der Abdeckung 10 dann eingreifen, wenn die Abdeckung 10 korrekt aufgesetzt ist. Selbstverständlich kann die Anordnung von Nase und Kerbe auch umgekehrt erfolgen. Wichtig ist auch hier, daß diese Justiereinrichtungen 15, 16 symmetrisch zur Symmetrieebene S angeordnet sind, so daß das Aufsetzen der Abdeckung 10 auf das Bauteil 20 ohne großes Nachdenken vorgenommen werden kann.

Die in den Figuren 1 - 8 gezeigte Entwässerungsrinne besteht somit aus insgesamt nur 4 voneinander getrennt zu handhabenden Stücken, nämlich dem Bauteil 20 mit den daran befestigten ersten Verriegelungsteilen 30, der Abdeckung 10 mit den daran gebildeten zweiten Verriegelungsteilen 50 und zwei (identisch geformten) Verriegelungsstücken 40.

Um die Abdeckungen 10 auf die in den Erdboden eingesetzten Bauteile 20 aufzusetzen und dort zu verriegeln, werden zunächst die zwei Verriegelungsstücke 40 in die den zweiten Verriegelungsteilen 50 zugeordneten Rastausnehmungen 52 eingesetzt. Da die Rastausnehmungen 52 im Querschnitt gesehen (siehe Fig. 2) außerhalb der Oberenden der Schrägflächen 31 liegen, kann nun die Abdeckung 10 aufgesetzt werden. Danach werden die Verriegelungsstücke 40 mit einem geeigneten Werkzeug, z. B. mit einem Schraubenzieher oder auch nur einem Stöckchen aus dem Rastausnehmungen 52 herausgehoben und fallen in die Spalte 22. Damit ist die Abdeckung 10 auf dem Bauteil 20 dauerhaft festgesetzt. Das Herausnehmen erfolgt in umgekehrter Weise und erfordert ebensowenig Werkzeug oder Geschicklichkeit.

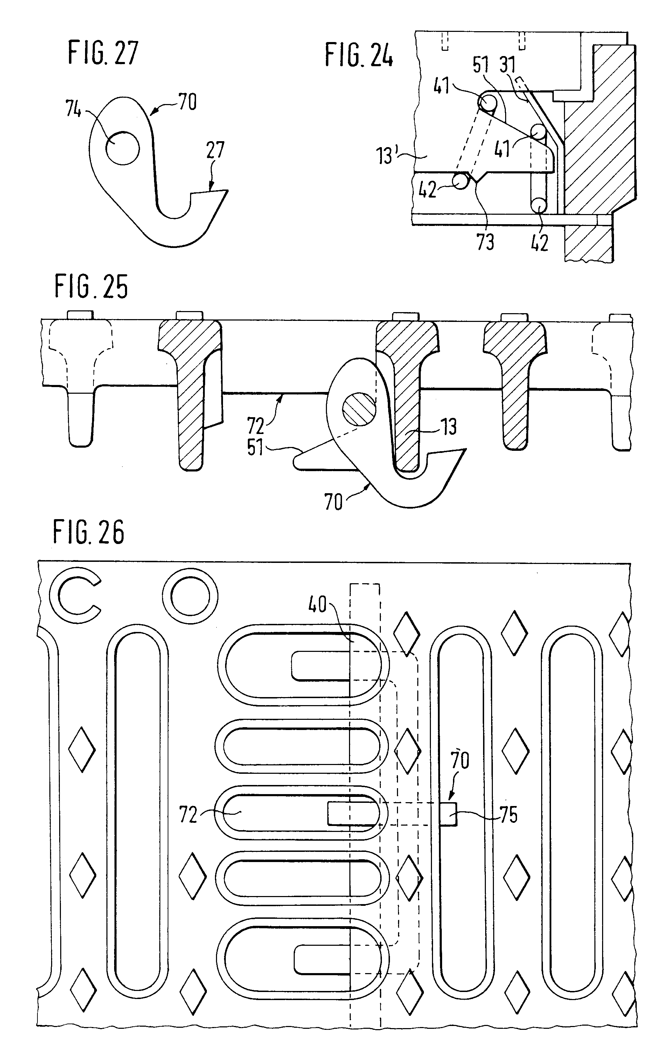

Bei einer besonders bevorzugten Ausführungsform, die in Fig. 24 skizziert ist, befindet sich in den zweiten Schrägflächen 51 keine Rastausnehmung 52, wie sie beispielsweise in Fig. 2 gezeigt ist. In dieser Ausführungsform der Erfindung ist vielmehr bei einem im wesentlichen in der Mitte zwischen den zwei in Fig. 3 gezeigten Querstegen 13 mit jeweils einem Spalt 22 ein Quersteg 13' gemäß Fig. 24 vorgesehen, der an seinem Unterrand eine nach unten ragende Klemmnase 73 aufweist.

Um das Verriegelungsstück 40 nach oben, aus dem Klemmbereich herauszubewegen und dort zu halten, schiebt man mittels eines länglichen Instrumentes, z. B. mittels eines Schraubenziehers, das Verriegelungsstück 40 mit seinem gekröpften Abschnitt 42 derart über die Klemmnase 73, daß es hinter deren, der Innenseite der Rinne zugewandten Fläche rutscht. Dies ist durch die Elastizität des Verriegelungsstücks 40 möglich. Auf diese Weise wird das Verriegelungsstück 40 in der in Fig. 24 gezeigten Position gehalten. Zum Entriegeln muß man lediglich wieder gegen den gekröpften Abschnitt 42 in umgekehrter Richtung drücken. Bei dieser Ausführungsform kann es nicht geschehen, daß das Verriegelungsstück 40 durch Stoßbelastungen versehentlich nach oben springt und in der Entriegelungsposition verbleibt.

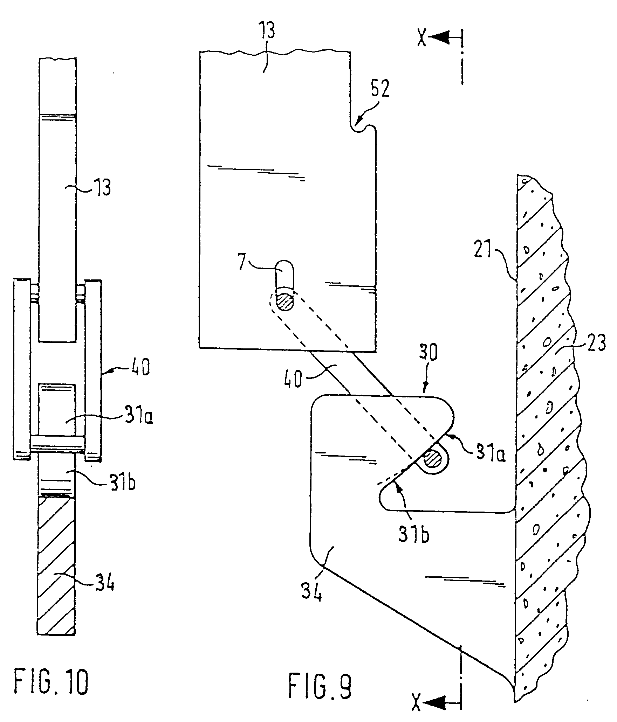

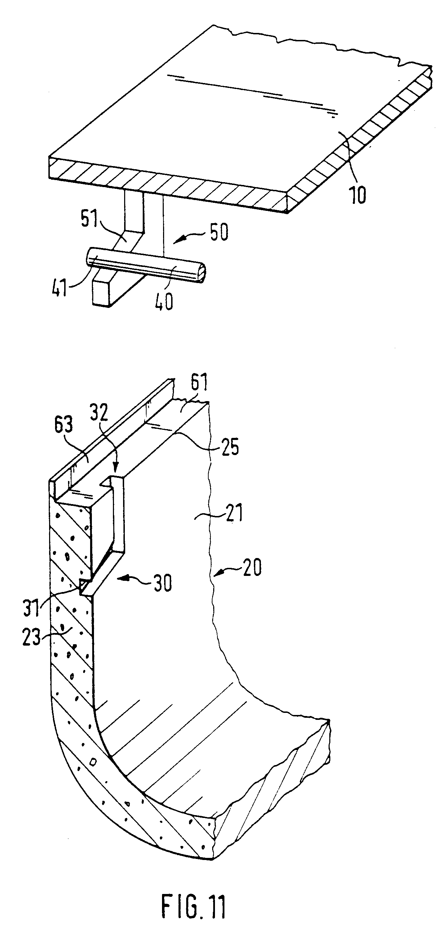

Bei der soeben beschriebenden Ausführungsform der Erfindung sind zwei Schrägflächen 31 und 51 vorgesehen, zwischen denen das Verriegelungsstück 40 sitzt. Das Verriegelungsstück 40 ist in diesem Fall indirekt, nämlich über die Schrägfläche 51 bzw. das dazugehörige Verriegelungsteil 50 an der Abdeckung 10 "beweglich befestigt". Bei einer zweiten, in den Fig. 9 und 10 gezeigten Ausführungsform ist das Verriegelungsstück 40 direkt an einem Quersteg 13 der Abdeckung 10 angebracht. In diesem Fall weist das Verriegelungsstück 40 eine, am deutlichsten aus Fig. 10 hervorgehende Form eines Kettengliedes auf, das mit einem oberen Ende in einem sich von oben nach unten erstrekkenden Langloch 7 im Quersteg 13 sitzt. An der Seitenwand 23 des Bauteils 20 ist senkrecht von diesem hervorstehend eine hakenförmige Lasche 34 angebracht. Diese weist eine nach oben offene Öffnung mit im wesentlichen dreieckigem Querschnitt auf, wobei der eine Schenkel des Querschnitts durch die Innenwand 21 des Bauteils 20, der zweite, dazu im wesentlichen senkrechte Schenkel den Unterrand der Öffnung und der dritte schräg zu den beiden anderen Schenkeln verlaufende Rand die Schrägfläche 31 bildet. Dieses Bauteil bildet somit das Verriegelungsteil 30.

Der zum offenen oberen Ende dieser Ausnehmung gerichtete Abschnitt der Schrägfläche 51 ist in Fig. 9 mit der Bezugsziffer 31a bezeichnet und verläuft kreisbogenförmig, wobei der Radius des Kreisbogens durch die Länge des "Kettengliedes" 40, welche das Verriegelungsteil bildet, bestimmt ist.

An ihrem unteren Ende ist die Schrägfläche in einem in Fig. 9 mit 31b bezeichneten Abschnitt abweichend vom Kreisbogen, im wesentlichen tangential aus diesem herausführend geformt. Dadurch wird dann, wenn das Verriegelungsstück 40 in der in Fig. 9 gezeigten Position eingesetzt ist, dieses Verriegelungsstück aufgrund seiner Schwerkraft einem (in Fig. 9) im Uhrzeigersinn wirkenden Drehmoment ausgesetzt, welches den unteren Teil des Verriegelungsstücks 40 in Richtung auf den Schrägflächenabschnitt 31b drückt. Dadurch, daß der Abschnitt 31b bei zunehmender Bewegung des Verriegelungsstücks 40 im Uhrzeigersinn immer weiter ab vom Drehzentrum des Verriegelungsstücks 40 (definiert durch das Unterende des Langlochs 7) liegt, wird die oben beschriebene Klemmwirkung erzielt, die einen sicheren Halt der Abdeckung 10 auf dem Bauteil 20 gewährleistet. Selbstverständlich ist es möglich, diese Anordnung um 90° gedreht aufzubauen, so daß das Langloch 7 nicht mehr in einem Quersteg 13, sondern in einem Längssteg (siehe Fig. 3) der Abdeckung 10 angebracht ist.

Um das Verriegelungsstück 40 in eine Entriegelungsposition zu bringen (zum Aufsetzen und Abnehmen der Abdeckung 10) wird das Verriegelungsstück 40 nach oben geschwenkt und im Langloch 7 nach oben gehoben, um dann in eine Rastausnehmung 52 im Quersteg 13 eingesetzt zu werden. Auch diese Maßnahme stellt nur geringste Anforderungen an die Geschicklichkeit des Ausführenden.

Im folgenden wird eine weitere Ausführungsform der Erfindung unter Bezug auf Fig. 11 erläutert. Diese Ausführungsform der Erfindung ist insofern prinzipiell von den vorherigen Ausführungsformen der Erfindung unterschiedlich, als die Neigungslinien der Schrägflächen 31, 51 parallel zur Innenwand 21 des Bauteils 20 verlaufen. In diesem Fall geht die Schrägfläche 31 von unten nach oben ansteigend in eine Einführöffnung 32 über, welche im wesentlichen senkrecht nach oben geht. Die Einführöffnung und die Schrägfläche sind in die Seitenwand 23 des Bauteils 20 eingesenkt.

Das Verriegelungsteil 50 ist als nach unten ragender Haken an der Unterseite der Abdeckung 10 angebracht und zwar derart, daß die Schrägfläche 51 des Verriegelungsteils 50 einen geringeren Steigungswinkel aufweist, als die Schrägfläche 31 des Verriegelungsteils 30 und dann, wenn die Abdeckung 10 auf die Auflagefläche 61 des Bauteils 20 aufgesetzt ist, die zweite Schrägfläche 51 tiefer liegt als die Schrägfläche 31. Diese beiden Schrägflächen 31 und 51 bilden zusammen somit wieder einen nach schräg unten konvergierenden Spalt, in welchen ein Ende 41 eines Verriegelungsstücks 40 einsetzbar ist. Selbstverständlich ist auf der anderen (nicht gezeigten) Seite des Bauteils 20 ein Paar von gleichartigen Verriegelungsteilen 30, 50 vorgesehen, wobei die Einführöffnungen 32 und die Schrägflächen 31, 51 gleichartig ausgebildet sind, so daß das Verriegelungsstück 40 als stabförmiger Körper, das Bauteil 20 im wesentlichen quer zu seiner Längsachse durchsetzend ausgebildet sein kann. Diese Ausführungsform der Erfindung unterscheidet sich von den zuvor gezeigten Ausführungsformen insbesondere dadurch, daß nach dem Abnehmen der Abdeckung 10 keine über die Innenwand 21 des Bauteils 20 hervorstehenden Teile vorliegen, die Reinigung des Bauteil-Innenraums also erleichtert ist.

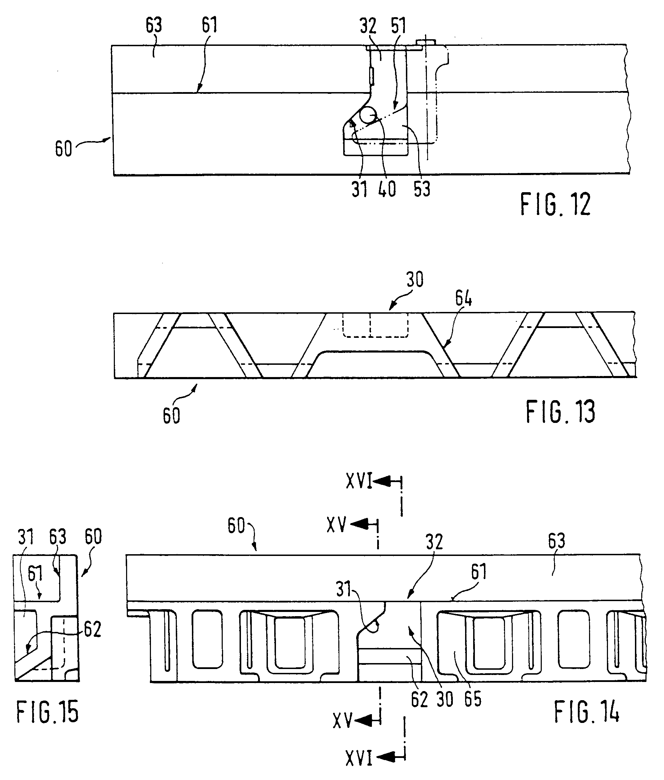

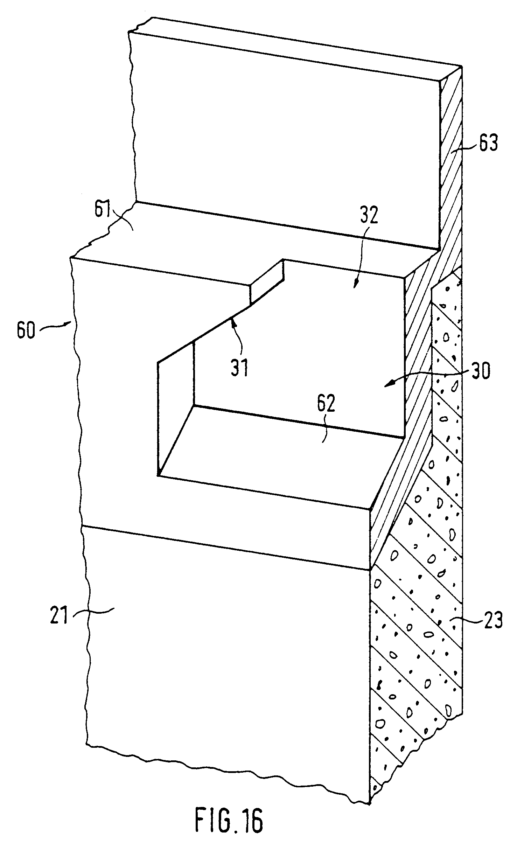

Eine auf der soeben erläuterten Prinzip-Anordnung beruhende besonders bevorzugte Ausführungsformen der Erfindung wird im folgenden anhand der Figuren 12 - 23 näher erläutert. Das Ausführungsbeispiel zeigt eine Entwässerungsrinne (bzw. Bauteile hiervon) für schwere Lasten.

Um eine Abdeckung 10 auf einem Bauteil 20 aus Polyesterbeton dauerhaft halten zu können, ist es von Vorteil, wenn die Abdeckung 10 nicht direkt auf dem Oberrand 25 der Seitenwand 23 des Bauteils 20 liegt, sondern der Oberrand von einer Verstärkungszarge 60 gebildet ist, die in die Seitenwand (bzw. deren Oberrand) eingegossen ist. Die Verstärkungszarge 60 ist ein Metall- (Eisen) Gußteil, das in den Abbildungen schematisiert gezeigt ist und (auf jeder Seite der Entwässerungsrinne) eine Auflagefläche 61, einer von dieser senkrecht nach oben hervorstehenden Seitenrand 63 und nach unten ragende Winkelstege 64 aufweist, wie dies in der obengenannten EP 0 081 762 A1 näher erläutert ist.

Das Verriegelungsteil 30 umfaßt wieder eine Schrägfläche 31 und eine Einführöffnung 32, wie dies im Prinzip anhand der Fig. 11 (perspektivisch) gezeigt wurde. Auch hier ist somit das Verriegelungsteil 30 in die "Seitenwand" (bzw. in die Rand-Zarge) der Entwässerungsrinne eingelassen.

Es könnte nun geschehen, daß sich in einer solchen, nach oben offenen Ausnehmung in einer Entwässerungsrinne selbst dann, wenn die nach oben führende Öffnung 32 durch die Abdeckung 10 verschlossen ist, Schmutz ansammelt, so daß die Öffnung sich zusetzt und eine Bewegbarkeit des Verriegelungsstücks 40 nicht mehr gegeben ist. Um dieses zu vermeiden, ist die untere Begrenzungsfläche 62 nach unten und außen geneigt ausgebildet. Etwa eindringende Schmutzteile oder Steine fallen somit in die Rinne.

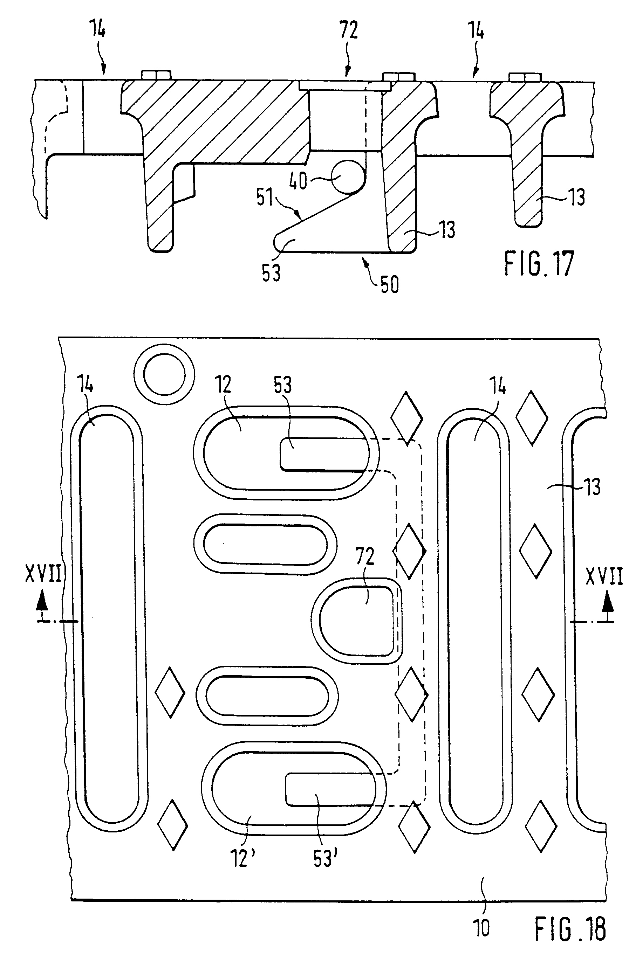

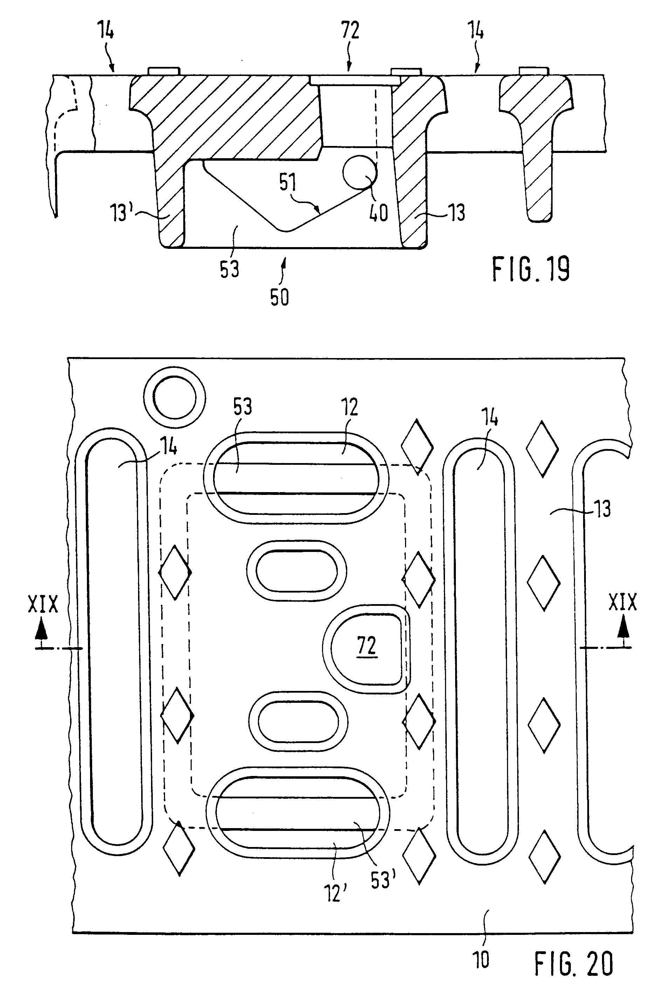

An der Abdeckung 10 ist, wie in Fig. 12 schematisiert angedeutet, nach unten von dieser hervorstehend, ein Steg 53 angesetzt, dessen oberer Rand die bereits beschriebene Schrägfläche 51 bildet. Die Dimensionierung ist hierbei wieder derart, daß zwischen den Schrägflächen 31 und 51 ein sich nach unten verjüngender Spalt gebildet ist, in welchen ein Verriegelungsstück 40 einsetzbar ist. Dieser Steg 53 ist, wie genauer aus den Figuren 17 - 20 hervorgeht, senkrecht von Querstegen 13 eines Gußrostes hervorstehend mitgegossen. Er kann entweder nur mit einem Ende (siehe Figuren 17, 18) oder mit beiden Enden (siehe Figuren 19 und 20) mit dem Quersteg 13 bzw. mit Querstegen 13, 13' verbunden sein. Wichtig ist hierbei der Umstand, daß die obere Schrägfläche 51 so angeformt ist, daß beim Aufsetzen der Abdeckung 10 auf das Bauteil 20 die korrekte Lage der Schrägflächen 31 und 51 zueinander sichergestellt ist.

Um nun bei einer solchen Guß-Abdeckung derartige Schrägflächen 51 ausbilden zu können, die ja zwangsläufig Hinterschneidungen bilden, wird vorgschlagen, über den Stegen 53 Ausnehmungen 12 vorzusehen. Dadurch ist es möglich, mit nur zwei Formhälften zu arbeiten.

Bei den zuvor gezeigten Ausführungsformen der Erfindung waren zum Halten der Verriegelungsstücke 40 in ihrer Entriegelungsposition, also zum Aufsetzen und Abnehmen der Abdeckungen 10 Rastausnehmungen 52 vorgesehen. Bei extrem harten und starken Stößen könnte es nun geschehen, daß ein Verriegelungsstück 40 nach oben geschleudert wird und in einer Rastausnehmung 52 einrastet. Dann wäre kein sicherer Halt der Abdeckung 10 auf dem Bauteil 20 mehr gegeben.

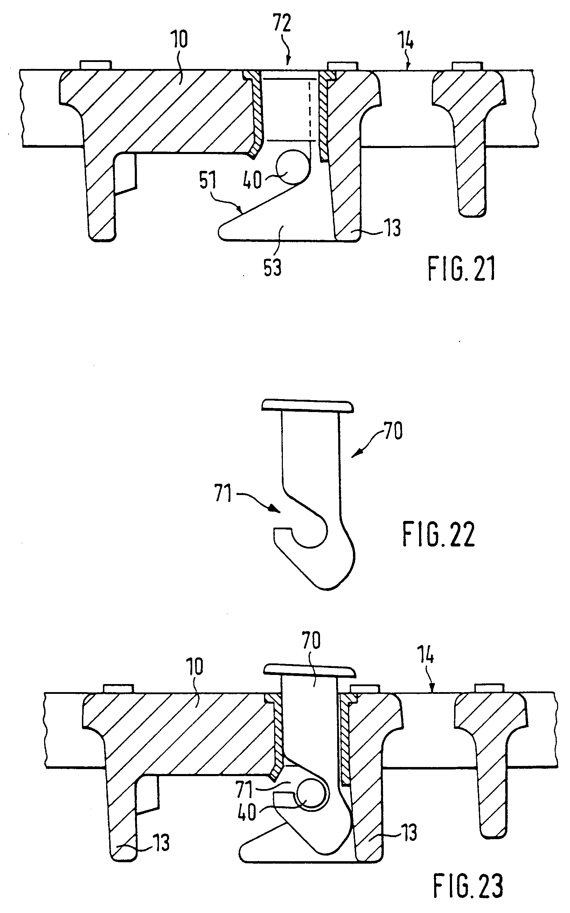

Um dies zu vermeiden, wird bei der hier gezeigten Ausführungsform der Erfindung ein gesondertes Fixierteil 70 (Fig. 22, 23) vorgesehen, das in eine (mittige) Öffnung 72 in der Abdeckung 10 einsetzbar ist. Das Fixierteil weist eine Rastausnehmung 71 auf, in welche ein Verriegelungsstück 40 einsetzbar ist. Dieser Zustand ist in Fig. 23 gezeigt. Diese Fixierteile 70 könnten an sich herausgenommen werden. Vorzugsweise bleiben sie jedoch in die Abdeckung eingesetzt. Zum Entriegeln schiebt man dann das Verriegelungsstück 40 mittels eines länglichen Instrumentes (Schraubenzieher) die zweite Schrägfläche 51 nach oben, so daß es dann mit dem Fixierteil 70 in Eingriff kommt. Bei weiterem Schieben wird das Fixierteil 70 nach oben geschoben und gelangt in eine Position, wie sie in Fig. 23 gezeigt ist. In dieser Position bleibt das Fixierteil 70 und hält das Verriegelungsstück 40 aufgrund von Reibungskräften zwischen dem Fixierteil 70 und der Abdeckung 10. In diesem Zustand kann die Abdeckung 10 abgehoben werden. Will man nun wieder eine Verriegelung erreichen, also das Verriegelungsstück 40 die Schrägfläche 51 nach unten gleiten lassen, so drückt (tritt) man einfach auf das Fixierteil 70, das dann nach unten rutscht und das Verriegelungsstück 40 aus der Rastausnehmung 71 herausgleiten läßt.

Eine weitere bevorzugte Ausführungsform eines Fixierteils wird anhand der Fig. 25 - 27 näher beschrieben. Bei dieser Ausführungsform ist ein Fixierteil 70 vorgesehen, welches im wesentlichen hakenförmig ausgebildet ist (siehe Fig. 27). Dieses hakenförmige Fixierteil 70 weist eine Bohrung 74 auf, welche im wesentlichen dem Durchmesser des Verriegelungsstücks 40 angepaßt ist. Das Fixierteil 70 kann so auf das Verriegelungsstück 40 bis in etwa in dessen Mitte aufgeschoben werden. Hierzu wird ausdrücklich auf Fig. 26 Bezug genommen.

Um nun das Verriegelungsstück 40 in seiner hochgehobenen Position zu halten, in welcher die Abdeckung 10 abgenommen werden kann, schiebt man das Verriegelungsstück 40 mittels eines länglichen Instrumentes (Schraubenzieher) die zweite Schrägfläche 51 nach oben (in den Figuren 25 und 26 nach rechts), und zwar zusammen mit dem Fixierteil 70. Der bei dieser Bewegung führende Abschnitt des Fixierteils 70 kommt dabei in Anschlag mit dem Quersteg 13, so daß das Fixierteil 70 mit seiner Haken-Öffnung unter den unteren Rand des Querstegs 13 schlüpft und sich an diesem festhängt. Dies wird u. a. durch eine hinreichende Elastizität des Fixierteils 70 oder des Verriegelungsstücks 40 erreicht. In dieser Position bleibt somit das Verriegelungsstück 40 hängen bzw. wird es durch das Fixierteil 70 gehalten, so daß man die Abdeckung 10 entfernen kann. Will man wieder die Verriegelungsposition erreichen, so drückt man lediglich auf das Hakenende 75, so daß dieser vom Quersteg 13 freikommt. Dadurch fällt das Verriegelungsstück 40 nach unten und erzeugt die gewünschte Klemmwirkung.

Hierbei ist noch anzumerken, daß das Fixierteil 70 vorzugsweise reibschlüssig auf dem Verriegelungsstück 40 sitzt. Weiterhin weist das Fixierteil 70 im Bereich der Bohrung 74 einen hinreichenden Durchmesser derart auf, daß zumindest im hochgehobenen Zustand (Fig. 25) ein seitliches Hin- und Herwandern des Fixierteils 70 durch seinen Anschlag mit den Rändern der Öffnung 72 in der Trittfläche verhindert wird. Im fixierten Zustand des Verriegelungsstücks 40 kann somit eine einheitliche Handhabung der Abdeckung 10 zusammen mit den Verriegelungsstücken 40 leicht erfolgen, da diese mittels der Fixierteile 70 einwandfrei an der Abdeckung 10 befestigt sind.

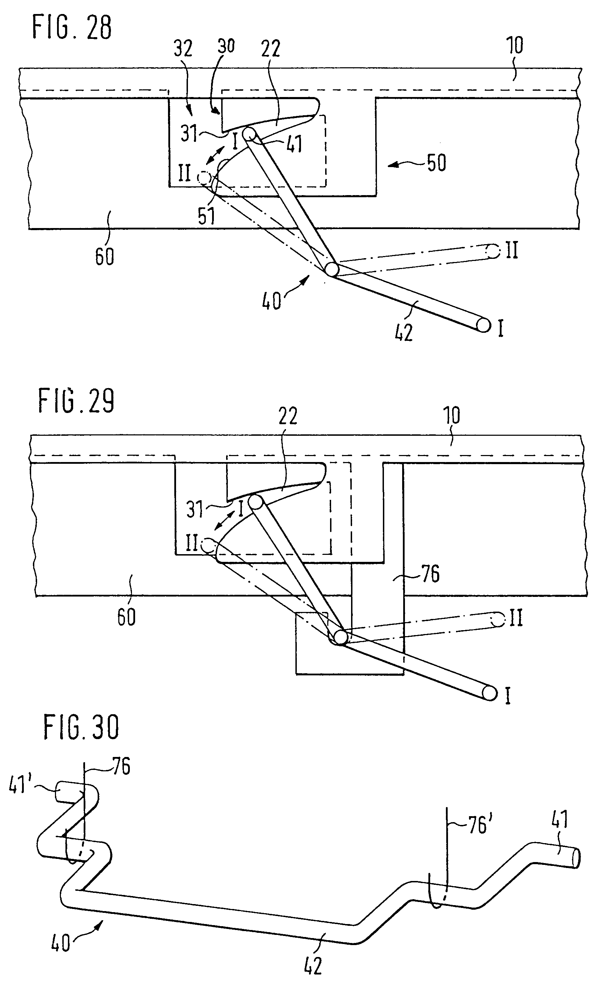

In den Figuren 28 bis 30 ist eine weitere Ausführungsform der Erfindung gezeigt, bei welcher das Verriegelungsstück 40 bzw. dessen Enden 41 nicht durch das Gewicht nach unten, die Schrägfläche 51 hinabrutschen und dabei sich in den enger werdenden Spalt hineinklemmen, sondern durch eine Hebel-Anordnung nach oben gehoben werden. Der Spalt verjüngt sich in diesem Fall nach oben. Diese Hebel-Anordnung umfaßt eine gekröpfte Stange (Fig. 30), die an den in Fig. 30 gezeigten Positionen in hakenförmige Auflager 76 eingehängt ist, wobei das Gewicht des gekröpften Abschnittes 42 bzw. der Enden 41, 41' sowie die dazu gehörigen Hebelarme derart dimensioniert sind, daß das gekröpfte Ende 42 das Übergewicht bekommt und bei Aufhängung in den Auflagern 76, 76' nach unten kippt. Die Auflager 76 sind hierbei an der Abdeckung 10 befestigt. Selbstverständlich ist es auch möglich, das Verriegelungsstück 40 auf andere Weise so vorzuspannen, daß es in Richtung des engeren Endes des Spaltes 22 gezogen wird. Im übrigen sind auch bei dieser Ausführungsform der Erfinder gleiche oder gleichwirkende Teile mit denselben Bezugsziffern versehen wie bei den zuvor gezeigten Ausführungsformen.

Aus Obigem geht hervor, daß sich verschieden Einzelmerkmale der beschriebenen Ausführungsformen miteinander kombinieren bzw. untereinander austauschen lassen. Beispielsweise kann die anhand eines aus Stahlblech gefertigten Rostes (Figuren 1 - 8) gezeigte Formgebung (Verlauf der Schrägfläche 51) auch an einer Gußabdeckung gemäß Figuren 17 - 20 verwirklicht werden und umgekehrt. Weiterhin kann das in den Figuren 21 - 23 gezeigte Fixierteil auch bei der Ausführungsform nach den Figuren 1 - 8 Anwendung finden (und umgekehrt). Schließlich ist zu erwähnen, daß bei der zuletzt gezeigten Ausführungsform der Erfindung wiederum Fixiereinrichtungen 15 und 26 vorgesehen sind, um eine definierte Lage der Abdeckung zum Bauteil 20 in dessen Längsrichtung vorzugeben.

Bei der anhand der Figuren 12 - 23 gezeigten Ausführungsform der Erfindung sind die Verriegelungsteile 30, 50 ebenfalls wieder zur Symmetrieebene S des rinnen- oder kanalförmigen Bauteils 20 und seiner Abdeckung 10 ausgebildet. Bei dieser Variante der Erfindung aber wird dadurch, daß die Stege 53 bzw. Neigungslinien der Schrägflächen 51 parallel zu den Innenwänden 21 des Bauteils 20 verlaufen ein weiterer Vorteil gewährleistet, der zum Tragen kommt, wenn eine horizontale in Bauteillängsrichtung wirkende Kraft auf die Abdeckung 10 einwirkt. Wenn in diesem Fall nämlich die Abdeckung relativ zum Bauteil 20 verschoben wird, so verengt sich zumindest ein Paar von Spalten zwischen den Verriegelungsteilen 30 und 50, was durch die Klemmstücke 40 verhindert wird. Dies bedeutet also, daß bei der hier gezeigten Ausführungsform der Erfindung deren großer Vorteil der Selbst-Spannung nicht nur in vertikaler Richtung (Abheben der Abdeckung 10), sondern auch in horizontaler Richtung (Verschieben der Abdeckung 10 auf dem Bauteil 20) wirkt.

### Bezugszeichenliste

- 7: Langloch
- 8: Längssteg
- 9: Rahmen
- 10: Abdeckung
- 11: Unterseite
- 12: Öffnung
- 13: Quersteg
- 14: Öffnung
- 15: Kerbe
- 16: Haltestück
- 17: Ende des Haltstückes
- 18: Abgewinkelter Abschnitt
- 19: Bandförmiger Körper
- 20: Bauteil
- 21: Innenwand
- 22: Spalt
- 23: Seitenwand
- 25: Rand
- 26: Nase
- 27: Boden
- 30: Erstes Verriegelungsteil
- 31: Schrägfläche
- 32: Einführöffnung
- 40: Verriegelungsstück
- 41: Ende des Verriegelungsstücks
- 42: Gekröpfter Abschnitt
- 50: Zweites Verriegelungsteil
- 51: Zweite Schrägfläche
- 52: Rastausnehmung
- 53: Steg
- 54: Lasche
- 60: Verstärkungszarge
- 61: Auflagefläche
- 62: Begrenzungsfläche
- 63: Seitenrand
- 64: Winkelsteg
- 70: Fixierteil
- 71: Rastausnehmung
- 72: Öffnung in der Trittfläche
- 73: Klemmnase
- 74: Bohrung
- 75: Hakenende
- 76: Auflager

## Patentansprüche

1. Verriegelungsvorrichtung insbesondere einer Entwässerungsrinne, einem Gulli od. dgl. zwischen einem im Boden einlaßbaren Bauteil (20) und seiner im wesentlichen horizontal angeordneten, überfahrbaren Abdeckung (10) mit folgenden Merkmalen:
a) An der Innenwand des Bauteils (2) ist ein erstes Verriegelungsteil (30) angebracht;
b) das erste Verriegelungsteil (30) weist eine erste Schrägfläche (31) auf;
c) an der Unterseite der Abdeckung (10) ist ein zweites Verriegelungsteil (50) angebracht;
d) das zweite Verriegelungsteil (50) weist eine zweite Schrägfläche (51) auf;
e) die Schrägflächen (31, 51) bilden miteinander einen konvergierenden Spalt (22), der sich beim vertikalen Abheben der Abdeckung (10) vom Bauteil (20) schließt, so daß sich die Schrägflächen (31, 51) einander nähern;
f) die Schwerkraft und/oder Beaufschlagungseinrichtungen beaufschlagen ein Verriegelungsstück (40) in die Verriegelungsposition und in Richtung des engeren Endes des Spaltes (22);
g) die Schrägflächen (31, 51) sind gegenüber der Vertikalen derart geneigt, daß das in einer Verriegelungsposition auf der zweiten Schrägfläche (51) liegende Verriegelungsstück (40) beim Abheben der Abdeckung (10) und vertikal nach oben bewegtem Verriegelungsstück (40) gegen die darüber liegende erste Schrägfläche (31) gedrückt wird.

2. Verriegelungsvorrichtung insbesondere einer Entwässerungsrinne, einem Gulli od. dgl. zwischen einem im Boden einlaßbaren Bauteil (20) und seiner im wesentlichen horizontal angeordneten, überfahrbaren Abdeckung (10) mit folgenden Merkmalen:
a) an der Innenwand des Bauteils (20) ist ein Verriegelungsteil (30) angebracht;
b) das Verriegelungsteil (30) weist eine Schrägfläche (31) auf;
**dadurch gekennzeichnet,** daß
c) an der Unterseite der Abdeckung (10) ein oberes Ende eines Verriegelungsstücks (40) angebracht ist,
d) im Verrieglungszustand das Verriegelungsstück (40) mit einem unteren Ende unter der Schrägfläche (31) hängt, wobei das Verriegelungsstück (40) derart beweglich an der Abdeckung (10) angebracht ist, daß es in Richtung auf einen unteren Abschnitt (31b) der gegenüber der Vertikalen geneigten Schrägfläche (31) beaufschlagt wird und beim Abheben der Abdeckung (10) an der Schrägfläche (31) klemmt und von ihr an einer Bewegung nach oben gehindert wird.

3. Verriegelungsvorrichtung nach einem der vorhergehenden Ansprüche,
dadurch gekennzeichnet,
daß das Verriegelungsstück (40) einen mindestens im Bereich der Schrägfläche (n) (31, 51) im wesentlichen kreisrund ausgebildeten Querschnitt aufweist.

4. Verriegelungsvorrichtung nach einem der vorhergehenden Ansprüche,
dadurch gekennzeichnet,
daß die ersten und gegebenenfalls zweiten Verriegelungsteile (30, 50) jeweils paarweise vorgesehen und derart angeordnet sind, daß ein einziges Verriegelungsstück (40) mit jeweils einem seiner zwei Enden (41, 41') mit den Verriegelungsteilen (30, 50) zusammenwirkt.

5. Verriegelungsvorrichtung nach einem der vorhergehenden Ansprüche,
dadurch gekennzeichnet,
daß das Verriegelungsstück (40) als herausnehmbares Teil ausgebildet ist.

6. Verriegelungsvorrichtung nach einem der vorhergehenden Ansprüche,
dadurch gekennzeichnet,
daß Fixiereinrichtungen (52) vorgesehen und derart angebracht sind, daß das Verriegelungsstück außer Eingriff mit der Schrägfläche (31) bzw. den Schrägflächen (31, 51) haltbar ist.

7. Verriegelungsvorrichtung nach einem der vorhergehenden Ansprüche,
dadurch gekennzeichnet,
daß das am Bauteil (20) befestigte Verriegelungsteil (30) an einem mit diesem verbundenen Metallelement (60) vorzugsweise einstückig befestigt ist.

8. Verriegelungsvorrichtung nach Anspruch 7,
dadurch gekennzeichnet,
daß das Metallelement (60) eine Auflagefläche (61) für die Abdeckung (10) aufweist.

9. Verriegelungsvorrichtung nach Anspruch 8,
dadurch gekennzeichnet,
daß die Auflagefläche (61) im wesentlichen formschlüssig mit der Abdeckung (10) in Eingriff bringbar ist.

10. Verriegelungsvorrichtung nach Anspruch 6,
dadurch gekennzeichnet,
daß die Fixiereinrichtungen nach oben offene Rastausnehmungen (52) in der Abdeckung (10) umfassen, in welchen ein Verriegelungsstück (40) aufnehmbar ist.

11. Verriegelungsvorrichtung nach Anspruch 6,
dadurch gekennzeichnet,
daß die Fixiereinrichtung ein getrennt handhabbares Fixierteil (70) umfaßt, das eine nach oben offene Rastausnehmung (71) aufweist, in welcher das Verriegelungsstück (40) aufnehmbar ist und das in der Abdeckung (10) reversibel befestigbar ist.

12. Verriegelungsvorrichtung nach einem der vorhergehenden Ansprüche,
dadurch gekennzeichnet,
daß die erste Schrägfläche (31) von einer Innenwand (21) des Bauteils (20) hervorsteht.

13. Verriegelungsvorrichtung nach Anspruch 12,
dadurch gekennzeichnet,
daß die zweite Schrägfläche (51) von einer Unterkante einer nach unten divergierenden, kerbenförmigen Öffnung (22) in einer Endkante eines Querstegs (13) gebildet ist, der senkrecht zur Abdeckung (10) an deren Unterseite (11) befestigt ist.

14. Verriegelungsvorrichtung nach einem der Ansprüche 12 oder 13,
dadurch gekennzeichnet,
daß das erste Verriegelungsteil (30) als bandförmiger Körper (19) ausgebildet ist.

15. Verriegelungsvorrichtung nach Anspruch 14,
dadurch gekennzeichnet,
daß der bandförmige Körper (19) an einem Haltestück (16) befestigt ist, das in eine Seitenwand (23) des Bauteils (20) einsetzbar ist.

16. Verriegelungsvorrichtung nach Anspruch 15,
dadurch gekennzeichnet,
daß das Haltestück (16) als Traverse ausgebildet ist, deren Enden jeweils in einer Seitenwand (23, 23') des Bauteils (20) sitzen.

17. Verriegelungsvorrichtung nach Anspruch 1,
dadurch gekennzeichnet,
daß die erste Schrägfläche (31) parallel zu einem Rand (25) des Bauteils (20) verläuft.

18. Verriegelungsvorrichtung nach Anspruch 17,
dadurch gekennzeichnet,
daß das erste Verriegelungsteil (30) als Ausnehmung unter einer Auflagefläche (61) einer vorzugsweise metallischen Verstärkungszarge (60) ausgebildet ist, die einen Oberrand des Bauteils (20) bildet.

19. Verriegelungsvorrichtung nach Anspruch 18,
dadurch gekennzeichnet,
daß die Ausnehmung eine nach außen abfallende untere Begrenzungsfläche (62) aufweist.

20. Verriegelungsvorrichtung nach Anspruch 1, wobei die Abdeckung (10) als (Metall-) Gußteil ausgebildet ist,
**dadurch gekennzeichnet,**
daß das zweite Verriegelungsteil (50) einen Steg (53) umfaßt, der eine, die zweite Schrägfläche (51) bildende Oberkante aufweist und mit mindestens einem Ende in die Unterseite der Abdeckung (10) übergeht und daß die Abdeckung (10) im Bereich über der Schrägfläche (51) bzw. über dem Steg (53) offen (Öffnung 12) ist.

21. Verriegelungsvorrichtung nach einem der vorhergehenden Ansprüche, wobei das Bauteil (20) langgestreckt, im wesentlichen rinnen- oder trogförmig ausgebildet ist,
**dadurch gekennzeichnet,**
daß an beiden Teilen des Bauteils (20) bzw. der Abdeckung (10) jeweils ein Paar von Verriegelungsteilen (30, 30'; 50, 50') vorgesehen ist, die bezüglich einer senkrecht zur Bauteil-Längsachse verlaufenden Symmetrieebene (S) symmetrisch ausgebildet sind.

22. Verriegelungsvorrichtung nach Anspruch 21,
dadurch gekennzeichnet,
daß an der Abdeckung (10) und am Bauteil (20) zueinander korrespondierend geformte Justiereinrichtungen (Kerbe 15, Nase 26) symmetrisch zur Symmetrieebene (S) angebracht sind, die dann in formschlüssigem Eingriff miteinander stehen, wenn die Abdeckung (10) auf dem Bauteil (20) verriegelt gehalten ist.

## Claims

1. Locking device particularly of a drainage channel, a gully hole or the like between a component (20) which can be let into the ground and its essentially horizontally arranged cover (10) in a road traffic surface with the following features :
a) a first locking part (30) is fitted to the internal wall of the component (20);
b) the first locking part (30) has a first inclined surface (31);
c) a second locking part (50) is fitted to the underside of the cover (10);
d) the second locking part (50) has a second inclined surface (51);
e) the inclined surfaces (31, 51) together form a converging gap (22) which closes when the cover (10) is lifted vertically from the component (20) so that the inclined surfaces (31, 51) come close together;
f) gravity and/or stress-application devices stress a locking piece (40) into the locking position and in the direction of the narrower end of the gap (22);
g) the inclined surfaces (31, 51) are inclined with respect to the vertical in such a way that the locking piece (40) resting on the second inclined surface (51) in a locking position is pressed against the first inclined surface (31) when the cover (10) is lifted and the locking piece (40) moved vertically upwards.

2. Locking device particularly of a drainage channel, a gully hole or the like between a component (20) which can be let into the ground and its essentially horizontally arranged cover (10) in a road traffic surface with the following features :
a) a locking part (30) is fitted to the internal wall of the component (20);
b) the locking part (30) has an inclined surface (31), characterized in that
c) an upper end of a locking piece (40) is fitted to the underside of the cover (10),
d) in the locking state the locking piece (40) is suspended with a lower end under the inclined surface (31), the locking piece (40) being movably fitted to the cover (10) in such a way that it is stressed in the direction of a lower section (31b) of the inclined surface (31) inclined with respect to the vertical and clamps to the inclined surface (31) when the cover (10) is lifted and is prevented from moving upwards by it.

3. Locking device according to one of the preceding Claims, characterized in that the locking piece (40) has a cross-section substantially in the form of a circle at least in the area of the inclined surface(s) (31, 51).

4. Locking device according to one of the preceding Claims, characterized in that the first and if necessary second locking parts (30, 50) are provided in pairs in each case and are arranged in such a way that a single locking piece (40) cooperates with the locking parts (30, 50) with one of its two ends (41, 41') in each case.

5. Locking device according to one of the preceding Claims, characterized in that the locking piece (40) is designed as a removable part.

6. Locking device according to one of the preceding Claims, characterized in that fixing devices (52) are provided and fixed in such a way that the locking piece can be held out of engagement with the inclined surface (31) and/or the inclined surfaces (31, 51).

7. Locking device according to one of the preceding Claims, characterized in that the locking part (30) fixed to the component (20) is preferably fixed to a metal element (60) connected thereto in one piece.

8. Locking device according to Claim 7, characterized in that the metal element (60) has a bearing surface (61) for the cover (10).

9. Locking device according to Claim 8, characterized in that the bearing surface (61) can be brought into engagement with the cover (10) substantially positively.

10. Locking device according to Claim 6, characterized in that the fixing devices comprise latch recesses (52) in the cover (10) which are open towards the top, into which a locking piece (40) can be accepted.

11. Locking device according to Claim 6, characterized in that the fixing device comprises a fixing part (70) which can be handled separately and which has a latch recess (71) which is open towards the top, into which the locking piece (40) can be accepted and which can be reversibly fixed in the cover (10).

12. Locking device according to one of the preceding Claims, characterized in that the first inclined surface (31) projects from an internal wall (21) of the component (20).

13. Locking device according to Claim 12, characterized in that the second inclined surface (51) is formed by a lower edge of an opening (22), which is notch-shaped and diverging downwards, in an end edge of a transverse rib (13) which is fixed at right angles to the cover (10) at its underside (11).

14. Locking device according to one of Claims 12 or 13, characterized in that the first locking part (30) is in the form of a strip-shaped body (19).

15. Locking device according to Claim 14, characterized in that the strip-shaped body (19) is fixed to a holding piece (16) which can be inserted into a side wall (23) of the component (20).

16. Locking device according to Claim 15, characterized in that the holding piece (16) is in the form of a crossbeam, the ends of which each sit in a side wall (23, 23') of the component (20).

17. Locking device according to Claim 1, characterized in that the first inclined surface (31) runs parallel to an edge (25) of the component (20).

18. Locking device according to Claim 17, characterized in that the first locking part (30) is in the form of a recess under a bearing surface (61) of a preferably metal reinforcement frame (60) which forms an upper edge of the component (20).

19. Locking device according to Claim 18, characterized in that the recess has a lower boundary surface (62) tapering towards the outside.

20. Locking device according to Claim 1, the cover (10) being in the form of a (metal) casting, characterized in that the second locking part (50) comprises a rib (53) which has an upper edge forming the second inclined surface (51) and blends with at least one end into the underside of the cover (10) and that the cover (10) is open (opening 12) in the area above the inclined surface (51) and/or above the rib (53).

21. Locking device according to one of the preceding Claims, the component (20) being designed to be long, substantially channel or trough-shaped, characterized in that on both parts of the component (20) and/or the cover (10) a pair of locking parts (30, 30' ; 50, 50') is provided in each case, which are designed to be symmetrical in respect of a plane of symmetry (S) running at right angles to the longitudinal axis of the component.

22. Locking device according to Claim 21, characterized in that adjusting devices (notch 15, nose 26) shaped correspondingly to one another are fitted to the cover (10) and to the component (20) symmetrical to the plane of symmetry (S), which devices are then in positive engagement with one another when the cover (10) is held on the component (20) so as to be locked.

## Revendications

1. Dispositif de verrouillage d'un caniveau d'écoulement, d'une bouche d'égout, notamment, ou autres, entre un composant (20) encastrable dans le sol et son revêtement routier (10), essentiellement horizontal, avec les caractéristiques suivantes:
a) un premier élément de verrouillage (30) est disposé sur la paroi interne du composant (20);
b) le premier élément de verrouillage (30) présente une première surface oblique (31);
c) un second élément de verrouillage (50) est disposé sur la face inférieure du revêtement (10);
d) le second élément de verrouillage (50) présente une seconde surface oblique (51);
e) les surfaces obliques (31, 51) forment entre elles une fente convergente (22), qui se ferme lorsque le revêtement (10) est relevé à la verticale du composant (20), de sorte que les surfaces obliques (31, 51) se rapprochent l'une de l'autre;
f) la force de gravité et/ou des dispositifs de sollicitation sollicitent une pièce de verrouillage (40) en position de verrouillage et en direction de l'extrémité la plus étroite de la fente (22);
g) les surfaces obliques (31, 51) sont inclinées par rapport à la verticale de sorte que la pièce de verrouillage (40), située sur la seconde surface oblique (51) dans une position de verrouillage, est pressée contre la première surface oblique sus-jacente (31) lors du relèvement du revêtement (10) et du mouvement vertical vers le haut de la pièce de verrouillage (40).

2. Dispositif de verrouillage d'un caniveau d'écoulement, d'une bouche d'égout, notamment, ou autres, entre un composant (20) encastrable dans le sol et son revêtement routier (10), essentiellement horizontal, avec les caractéristiques suivantes:
a) un élément de verrouillage (30) est disposé sur la paroi interne du composant (20);
b) l'élément de verrouillage (30) présente une surface oblique (31), caractérisé en ce que,
c) une extrémité supérieure d'une pièce de verrouillage (40) est disposée sur la face inférieure du revêtement (10),
d) à l'état de verrouillage, la pièce de verrouillage (40) pend par une extrémité inférieure au-dessous de la surface oblique (31), la pièce de verrouillage (40) étant disposée avec une possibilité de déplacement sur le revêtement (10), de sorte qu'elle est sollicitée en direction d'une section inférieure (31b) de la surface oblique (31), inclinée par rapport à la verticale, qu'elle se coince sur la surface oblique (31) lors du relèvement du revêtement (10), et que cette surface entrave son mouvement vers le haut.

3. Dispositif de verrouillage suivant l'une quelconque des revendications précédentes, caractérisé en ce que la pièce de verrouillage (40) présente une section transversale essentiellement circulaire, dans la zone de la (des) surface(s) oblique(s) (31, 51), du moins.

4. Dispositif de verrouillage suivant l'une quelconque des revendications précédentes, caractérisé en ce que les premiers, et les seconds éléments de verrouillage (30, 50), éventuellement, sont respectivement prévus par paires et ont une disposition telle, qu'une pièce de verrouillage unique (40) concourt par l'une de ses deux extrémités (41, 41') avec les éléments de verrouillage (30, 50).

5. Dispositif de verrouillage suivant l'une quelconque des revendications précédentes, caractérisé en ce que la pièce de verrouillage (40) est réalisée sous forme d'élément retirable.

6. Dispositif de verrouillage suivant l'une quelconque des revendications précédentes, caractérisé par des dispositifs de fixation (52) dont le montage est tel, que la pièce de verrouillage peut être maintenue hors de prise avec la surface oblique (31) et/ou les surfaces obliques (31, 51).

7. Dispositif de verrouillage suivant l'une quelconque des revendications précédentes, caractérisé en ce que l'élément de verrouillage (30), fixé sur le composant (20), est fixé d'une seule pièce, de préférence, sur un élément métallique (60) assemblé avec le composant.

8. Dispositif de verrouillage suivant la revendication 7, caractérisé en ce que l'élément métallique (60) présente une surface d'appui (61) pour le revêtement (10).

9. Dispositif de verrouillage suivant la revendication 8, caractérisé en ce que la surface d'appui (61) peut être amenée en prise, essentiellement mécanique, avec le revêtement (10).

10. Dispositif de verrouillage suivant la revendication 6, caractérisé en ce que les dispositifs de fixation comportent des évidements d'arrêt (52), ouverts vers le haut, dans le revêtement (10), et dans lesquels peut être logée une pièce de verrouillage (40).

11. Dispositif de verrouillage suivant la revendication 6, caractérisé en ce que le dispositif de fixation comporte un élément de fixation (70), maniable séparément, qui présente un évidement d'arrêt (71) ouvert vers le haut, dans lequel peut être logée la pièce de verrouillage (40), et qui peut être fixé d'une manière réversible dans le revêtement (10).

12. Dispositif de verrouillage suivant l'une quelconque des revendications précédentes, caractérisé en ce que la première surface oblique (31) dépasse d'une paroi interne (21) du composant (20).

13. Dispositif de verrouillage suivant la revendication 12, caractérisé en ce que la seconde surface oblique (51) est formée par un bord inférieur d'une ouverture (22) en forme d'encoche, divergente vers le bas, dans un bord extrême d'un profil transversal (13), fixé sur la face inférieure (11) du revêtement (10), à la perpendiculaire de ce dernier.

14. Dispositif de verrouillage suivant l'une quelconque des revendications 12 ou 13, caractérisé en ce que le premier élément de verrouillage (30) est réalisé sous forme de corps (19) en forme de bande.

15. Dispositif de verrouillage suivant la revendication 14, caractérisé en ce que le corps (19) en forme de bande est fixé sur une pièce de maintien (16), qui peut être logée dans une paroi latérale (23) du composant (20).

16. Dispositif de verrouillage suivant la revendication 15, caractérisé en ce que la pièce de maintien (16) est réalisée sous forme de traverse, dont les extrémités reposent respectivement dans une paroi latérale (23, 23') du composant (20).

17. Dispositif de verrouillage suivant la revendication 1, caractérisé en ce que la première surface oblique (31) est parallèle à un bord (25) du composant (20).

18. Dispositif de verrouillage suivant la revendication 17, caractérisé en ce que le premier élément de verrouillage (30) est réalisé sous forme d'évidement sous-jacent à une surface d'appui (61) d'un châssis de renforcement (60), métallique de préférence, qui forme un bord supérieur du composant (20).

19. Dispositif de verrouillage suivant la revendication 18, caractérisé en ce que l'évidement présente une surface de délimitation inférieure (62), inclinée vers l'extérieur.

20. Dispositif de verrouillage suivant la revendication 1, le revêtement (10) étant réalisé sous forme de pièce coulée (métallique), caractérisé en ce que le second élément de verrouillage (50) comporte un profil (53), qui présente un bord supérieur formant la seconde surface oblique (51), et se prolonge, par une extrémité au moins, par la face inférieure du revêtement (10), et en ce que le revêtement (10) est ouvert (ouverture 12) dans la zone sus-jacente à la surface oblique (51) et/ou au profil (53).

21. Dispositif de verrouillage suivant l'une quelconque des revendications précédentes, le composant (20) étant allongé, essentiellement en forme de goulotte ou d'auge, caractérisé en ce qu'une paire d'éléments de verrouillage (30, 30'; 50, 50') est respectivement prévue sur les deux parties du composant (20) et/ou du revêtement (10), ces éléments ayant une réalisation symétrique par rapport à un plan de symétrie (S), perpendiculaire à l'axe Longitudinal du composant.

22. Dispositif de verrouillage suivant la revendication 21, caractérisé en ce que des dispositifs d'ajustage (encoche 15, ergot 26), d'une conformation mutuelle correspondante sur le revêtement (10) et le composant (20), sont disposés symétriquement par rapport au plan de symétrie (S), ces dispositifs étant en prise mécanique lorque le revêtement (10) est maintenu en position de verrouillage sur le composant (20).
